# EUROPEAN PATENT SPECIFICATION

(11) **EP 1 957 848 B1**
(45) Date of publication and mention of the grant of the patent: **05.09.2012**
(21) Application number: 06844709.3
(22) Date of filing: 30.11.2006
(51) Int. Cl.: F16L 11/04, B32B 1/08, C08L 67/02, B32B 27/36

(54) **HIGH TEMPERATURE THERMOPLASTIC POWER STEERING HOSE**
THERMOPLASTISCHER HOCHTEMPERATUR-STROMLENKSCHLAUCH
TUYAUX THERMOPLASTIQUES DE DIRECTIONS ASSISTEES SUPPORTANT DES TEMPERATURES ELEVEES

(30) Priority: 30.11.2005 US 740952 P
(43) Date of publication of application: 20.08.2008
(73) Proprietor: PARKER-HANNIFIN CORPORATION, Cleveland, Ohio 44124 (US)
(72) Inventor: TRACE, Benjamin, M., Tallmadge, OH 44278 (US); MARTINO, Nicola, North Canton, OH 44720 (US); RADER, Jeffrey, L., Streetsboro, OH 44241 (US); HENSLEY, Jimmy, Ravenna, OH 44266 (US); SWALLIS, Michael, R., Madison, OH 44057 (US)
(74) Representative: Albutt, Anthony John
(86) International application number: PCT/US2006/045986
(87) International publication number: WO 2007/064875

(56) References cited:
- WO-A-02/14727
- WO-A-03/042299
- WO-A-2005/092604
- JP-A- 2003 262 290
- US-A- 5 260 387

## Description

### Related Applications

The present application claims the benefit of U.S. Provisional Application No. 60/740,942 filed November 30, 2005.

### Field of the Invention

The present invention relates broadly to thermoplastic hoses and particularly thermoplastic reinforced hoses for high temperature applications, such as a power steering hose.

### Background of the Invention

Thermoplastic reinforced hoses have been used in a variety of fluid transfer applications. Such hoses have included a tubular core surrounded by one or more reinforcement courses of natural or synthetic fiber and/or steel wire. The reinforcement courses, in turn, are protected by a surrounding outer sheath or cover which may be of the same or different material as the core tube. The cover may also provide the hose with increased abrasion resistance. While being easy to form, thermoplastic reinforced hoses have not been suitable for use at high temperatures under high performance conditions for extended lengths of time. That is, conventional thermoplastic hoses have not been considered for use at temperatures above 121,11°C (250°F) and for extended periods of time on the order of 1000 hours or more.

Power steering systems heretofore have used formed metal tubing and flexible connector hoses made of thermoset (rubber) materials that can endure elevated operating temperatures of 148,88°C (300°F) for a period of time. The rubber hoses, however, are prone to deterioration over time and thus require replacement prior to or upon failure.

High performance hoses also have been made of other thermoset material, but such hoses often are expensive, difficult to form and/or too stiff and/or rigid.

WO 2005/092604 discloses a multi-layered pipe produced by co-extrusion of a segmented thermoplastic co polymer elastomer (COPE) outer body over the exterior surface of an annular tubular core.

### Summary of the Invention

The present invention provides a thermoplastic hose, and particularly a thermoplastic reinforced hose that has high resistance to temperature degradation as well as chemical resistance, and yet is easily formable when compared to prior art power steering and other high performance hoses that are capable of operating at elevated temperatures, such as 148,88°C (300°F) or higher, and at least above 121,11°C (250°F) or (260°F), for extended periods of time, such as 1000 hours or longer. A hose according to the present invention is characterized by the use of material comprising one or more thermoplastic polyether-polyester block copolymers, i.e. block copolymers of alternating hard and soft segments connected by ester and ether linkages, which material is characterized by a Shore D durometer hardness of at least 60. Different grades of thermoplastic polyether-polyester block copolymers may be blended in order to exhibit a combination of unique material properties including but not limited to retention of tensile strength at elevated temperature, retention of tensile and elongation properties after exposure to high temperature over long periods of time, flexibility and formability.

A hose according to the invention may be a monolayer hose, or a multilayer hose that can be unreinforced or reinforced. A multilayer hose may include a core tube and a cover with or without reinforcement interposed therebetween.

The hose or hose layer is made from a blend of a first thermoplastic polyether-polyester block copolymer characterized by a Shore D hardness no less than 65 and a second thermoplastic polyether-polyester block copolymer characterized by a Shore D hardness less than the first copolymer but no less than 55, than 55, whereby the resultant blended material from which the hose or hose layer is formed will have a Shore D hardness value between the values of the constituent copolymers. Still more particularly the hose or hose layer may be formed from a blend of from 5% to 95% by weight of the first copolymer and 5% to 95% by weight of the second copolymer, or from 25% to 75% by weight of the first copolymer and from 25% to 75% by weight of the second copolymer, or from 30% to 40% by weight of the first copolymer and from 60% to 70% by weight of the second copolymer.

A hose according to the invention may comprise an inner tubular layer and an outer tubular layer surrounding the core tube, wherein at least one of the core tube and cover are made of thermoplastic material comprising one or more thermoplastic polyether-polyester block copolymers, and said thermoplastic material has a Shore D hardness no less than 60. The inner tubular member may be made of said first thermoplastic material formulated to have a Shore D hardness of no less than 65, and more preferably no less than 70, and the outer tubular member may be made of a second thermoplastic material comprising one or more thermoplastic polyether-polyester block copolymers, the second thermoplastic material of said outer tubular member having a Shore D hardness less than the shore D hardness of the thermoplastic material forming the inner tubular member but no less than 64.

Both the inner tubular layer, such as a core tube, and the outer tubular layer, such as a cover, may be extruded, including co-extruded.

A reinforcement layer may surround the inner tubular member, and the outer tubular layer may surround the reinforcement layer. The reinforcement layer may include one or more filaments helically wound around the inner tubular layer, the one or more filaments preferably being selected from a group comprising nylon fibers, polyester fibers, aramid fibers, polyvinyl alcohol fibers, polyvinyl acetate fibers, polyolefin fibers, polyphenylene bezobisoxazole fibers, metal wires, and combinations thereof.

The thermoplastic material from which the inner and/or outer layers is formed may comprise from 1 % to 5% of a heat stabilizer.

One or more block copolymers may have a melting temperature of at least 200°C and a Vicat softening temperature of at least 125°C. More preferably, the inner tubular member and/or outer tubular member may have a melting temperature of at least 215°C and a Vicat softening temperature of at least 140°C, and more preferably at least 150°C, or a melting temperature of at least 200°C and a Vicat softening temperature of at least 125°C.

In a preferred embodiment, the copolymers are Arnitel^{®} EM740 and Arnitel^{®} EM630.

The invention also provides a method of forming a hose by extruding one or more layers thereof from a thermoplastic material comprising one or more thermoplastic polyether-polyester block copolymers, with the thermoplastic material having a Shore D hardness no less than 60. In a particular embodiment, the method comprises the steps of extruding a core tube, applying a reinforcement layer around the core tube, and extruding a cover around the reinforcement layer.

The foregoing and other features of the invention are hereinafter described in reference to the annexed drawing.

### Brief Description of the Drawing

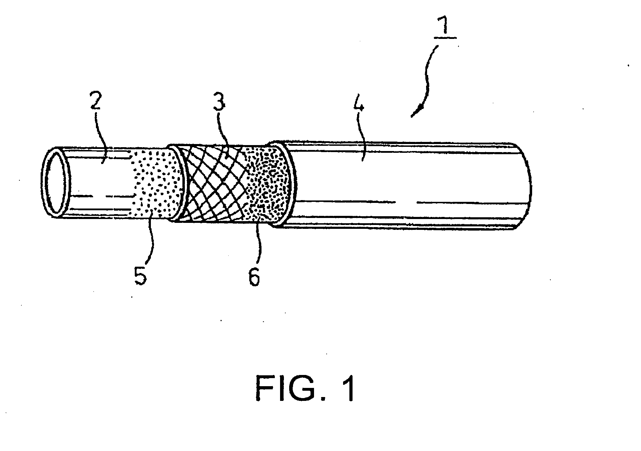

In the annexed drawing, Fig. 1 is a cut-away perspective view of a representative embodiment of a thermoplastic reinforced hose constructed in accordance with the present invention.

### Detailed Description

Certain terminology may be employed in the description to follow for convenience rather than for any limiting purpose. For example, the terms "forward," "rearward," "right," "left," "upper," and "lower" designate directions in the drawings to which reference is made, with the terms "inward," "interior," "inner," or "inboard" and "outward," "exterior," "outer," or "outboard" referring, respectively, to directions toward and away from the center of the referenced element, and the terms "radial" and "axial" referring, respectively, to directions perpendicular and parallel to the central longitudinal axis of the referenced element. Terminology of similar import other than the words specifically mentioned above likewise is to be considered as being used for purposes of convenience rather than in any limiting sense.

A preferred embodiment of a composite hose construction according to the invention has particular application as a power steering or other high performance hose capable of operating at elevated temperatures, such as 148,88°C (300°F) or higher, for extended periods of time, such as 1000 hours or longer. In addition, a preferred embodiment of the composite hose construction is capable of operating at high pressures, such as 1500 psi (10.3 MPa) or higher. It will be appreciated, however, that aspects of the present invention may find use in other hose constructions for a variety or general hydraulic or other fluid transfer applications. Use within such other applications therefore should be considered to be expressly within the scope of the present invention.

A hose according to the invention may be a monolayer hose, or a multilayer hose that can be unreinforced or reinforced. A multilayer hose may include a core tube and a cover with or without reinforcement interposed therebetween.

Referring now to Fig. 1, an exemplary multilayer hose according to the present invention is shown generally at 1. The hose 1 comprises an inner layer such as core tube 2, a reinforcement layer 3 surrounding the core tube, and an outer layer such as cover 4 surrounding the reinforcement layer, As discussed further below, an adhesive 5 may be used between the core tube and reinforcement layer and/or an adhesive 6 may be used between the reinforcement layer and cover, respectively. The hose may have additional layers without deviating from the general principals of the invention, such as a liner layer inside the core tube as may be desired for some applications. The liner layer may be formed, for example, from a polyamide such as nylon.

The hose 1 may be fabricated to any desired length using any suitable hose forming procedure, particularly where the inner core tube 2 is extruded to form a continuous seamless tube, the reinforcement layer 3 is formed by one or more filaments being helically wound around the inner core tube 2, and the cover is extruded over the reinforcement layer to form a continuous seamless cover. The hose may be formed in any desired length, and the hose, particularly for use as a power steering hose, will typically have an inside diameter from 6,35 mm (0.25 inch) to 50,8 mm (2 inches), and an outer diameter from 12,7 mm (0.5 inch) to 50,8 mm (2 inch). The hose may also have a typical overall wall thickness in the range of 1,27 mm (0.05 inch) to 5,08 mm (0.2 inch), with layer thicknesses ranging, for example, from 0,508 mm (0.02 inch) to 5,08 mm (0.2 inch). The thermoplastic layers may be extruded, including co-extruded, in a known manner.

The core tube 2 may formed from one or more thermoplastic polyether-polyester block copolymers, in particular TPE-E (or COPE) consisting of block copolymers of alternating hard and soft segments connected by ester and ether linkages. TPE-E and COPE polymers, and also TPE-P copolymers, are high performance thermoplastic elastomers that have excellent strength over a wide range of temperatures, excellent dynamic properties, e.g. creep and fatigue, high heat resistance, good resistance to chemicals, oils and greases, and dimensional stability.

Preferred polyester/polyether block copolymers are poly(butylene terephthalate)-block-poly(tetramathylene oxide) polymers such as Arnitel^{®} EM 740, sold by DSM Engineering Plastics. Hytrel^{®} polymers, sold by DuPont which meet the physical and chemical specifications set out herein can also be used.

The core and/or cover made of said thermoplastic material possesses retention of strength at elevated temperature and retention of strength and elongation properties after exposure to high temperatures over long periods of time. Additional advantages of a preferred embodiment of hose according to the invention include formability, desired expansion properties, colorability, abrasion resistance, long hose lengths, and twinning of hose to itself.

Preferably, the one or more thermoplastic polyether-polyester block copolymers have a melting temperature of at least 200°C (ISO 11357-1/3) and a Vicat softening temperature of at least 125°C (ISO 306). In an embodiment, the core tube and cover may have a melting temperature of at least 215°C and a Vicat softening temperature of at least 140°C, or at least 150°C. The one or more thermoplastic polyether-polyester block copolymers preferably also have a Shore D hardness greater than 55, and thus the core tube has a Shore D hardness greater than 55.

The tube is made from a blend of a first thermoplastic polyether-polyester block copolymer having a Shore D hardness no less than 65 and a second thermoplastic polyether-polyester block copolymer having a Shore D hardness less than the first thermoplastic polyether-polyester block copolymer but no less than 55. More preferably, the core tube is made from a blend of a first thermoplastic polyether-polyester block copolymer having a Shore D hardness no less than 70 and a second thermoplastic polyether-polyester block copolymer having a Shore D hardness less than the first thermoplastic polyether-polyester block copolymer but no less than 60.

The blend may comprise from 30% to 80% by weight of the first thermoplastic polyether-polyester block copolymer and from 10% to 50% by weight of the second thermoplastic polyether-polyester block copolymer. The blend may comprise from 20% to 40% by weight of the first thermoplastic polyether-polyester block copolymer and from 55% to 75% by weight of the second thermoplastic polyether-polyester block copolymer, or vice versa. The blend may comprise 32% ± 5% by weight of the first thermoplastic polyether-polyester block copolymer and 65% ± 5% by weight of the second thermoplastic polyether-polyester block copolymer, or vice versa.

The blend may further comprise from 1% to 5%, such as 3 %, by weight of a heat stabilizer(s). The blend may also comprise other additives including colorants, UV protection additives, hydrolysis-resistant additives and flame retardants. The heat stabilizers may be selected from those known by persons skilled in the art, examples including heat stabilizers available from DSM Engineering Plastics for use with Amitel^{®} TPE, copper(I) iodide or organic stabilizers, N-isopropyl-N'-diphen-yl-p-phenylenediamine (IPPD) or N,N'-diphenyl-p-phenylenediamine (DPPD).

In a particular blend, the first thermoplastic polyether-polyester block copolymer may be Arnitel^{®} EM740 (72 Shore D) and the second thermoplastic polyether-polyester block copolymer may be Amitel^{®} EM630 (60 Shore D), both sold by DSM Engineering Plastics. The hardnesses of these materials typically vary by ±3%. It of course will be appreciated that other materials may be used, such as similar Hytrel^{®} TPE-E block copolymers sold by DuPont, for example Hytrel^{®} 7246, and blends thereof, which meet the characteristics set out herein.

The cover 4 may be formed of a different or the same thermoplastic polyether-polyester block copolymer or copolymers. The above discussion of materials useful for forming the core tube is equally applicable to the cover.

The reinforcement layer 3, as above mentioned, may include one or more filaments helically wound around the core tube. The filaments may be selected from a group comprising nylon fibers, polyester fibers, aramid fibers, polyvinyl alcohol fibers, polyvinyl acetate fibers, polyolefin fibers, polyphenylene bezobisoxazole fibers, metal wires, and combinations thereof.

More generally, the reinforcement layer may include two or more reinforcement layers. Each reinforcement layers may be conventionally formed as braided, knitted, wrapped, or, as is shown, spiral, i.e., helically, wound of, for example, from 1 to about 60 ends of monofilament, continuous multi-filament, i.e., yarn, stranded, cord, roving, thread, tape, or ply, or short "staple" strands of a fiber material. The fiber material, which may be the same or different in the layers, may be a natural or synthetic polymeric material such as a nylon, cotton, polyester, polyamide, aramid, polyolefin, polyvinyl alcohol (PVA), polyvinyl acetate, or polyphenylene bezobisoxazole (PBO), or blend, a steel, which may be stainless or galvanized, brass, zinc or zinc-plated, or other metal wire, or a blend thereof. In a braided construction (not shown), which also may contain additional spiral wound, wrapped, and/or knitted layers, each of the reinforcement layers may be braided under, tension at a pitch angle of between, for example, about 45-63° using for example from between 12-96 carriers each having for example from 1 to about 32 ends of a 420-6600 denier (470-7400 decitex), multi-filament aramid, polyester, nylon, PVA, or PBO yarn, including in particular a 3600 denier nylon fiber having a mass/1000 feet of about 70 lbs to about 160 lbs, with six or seven ends, 24 carriers, at a pitch of about 1.4 to 1.9 inch and a braid angle of about 50° to about 60°.

The adhesive layers 5 and 6, if used, may be any suitable adhesive. An exemplary adhesive is Lord 7411 hotmelt adhesive, but other adhesives may be used. Other means may also be used to bond the layers together, such as by fusion, mechanically, chemically or adhesively as already mentioned, or a combination thereof.

## Claims

1. A hose comprising one or more tubular layers, at least one layer being made of a first thermoplastic material comprising one or more thermoplastic polyether-polyester block copolymers, and said thermoplastic material has a Shore D hardness no less than 60, wherein said first thermoplastic material comprises a blend of a first thermoplastic polyether-polyester block copolymer **characterized by** a Shore D hardness no less than 65 and a second thermoplastic polyether-polyester block copolymer **characterized by** a Shore D hardness less than the first thermoplastic polyether-polyester block copolymer but no less than 55.

2. A hose according to claim 1, wherein said first thermoplastic material comprises a blend of a first thermoplastic polyether-polyester block copolymer **characterized by** a Shore D hardness no less than 70 and a second thermoplastic polyether-polyester block copolymer **characterized by** a Shore D hardness less than the first thermoplastic polyether-polyester block copolymer but no less than 60.

3. A hose according to claim 1 or claim 2, wherein the blend comprises from 5% to 95% by weight of the first copolymer and from 5% to 95% by weight of the second copolymer; more preferably the blend comprises from 25% to 75% by weight of the first copolymer and from 25% to 75% by weight of the second copolymer; and still more preferably the blend comprises from 30% to 40% by weight of the first copolymer and from 60% to 70% by weight of the second copolymer.

4. A hose according to any preceding claim, wherein the first or second copolymer is a poly(butylene terephthalate)-block-poly(tetramethylene oxide) polymer.

5. A hose according to any preceding claim, comprising an inner tubular layer and an outer tubular layer surrounding the inner tubular layer, wherein at least one of the inner tubular layer and outer tubular layer are made of said first thermoplastic material.

6. A hose according to claim 8, wherein the inner tubular member is made of said first thermoplastic material formulated to have a Shore D hardness of no less than 65, and more preferably no less than 70; and/or the outer tubular member is made of a second thermoplastic material comprising one or more thermoplastic polyether-polyester block copolymers, and said second thermoplastic material of said outer tubular member has a Shore D hardness less than the shore D hardness of the first thermoplastic material forming the inner tubular member but no less than 64.

7. A hose according to claim 5 or claim 6, wherein both the inner and outer tubular layers are extruded.

8. A hose according to any one of claims 5-7, further comprising a reinforcement layer surrounding the inner tubular member, and wherein the outer tubular layer surrounds the reinforcement layer; and the reinforcement layer includes one or more filaments helically wound around the inner tubular layer, the one or more filaments preferably being selected from a group comprising nylon fibers, polyester fibers, aramid fibers, polyvinyl alcohol fibers, polyvinyl acetate fibers, polyolefin fibers, polyphenylene bezobisoxazole fibers, metal wires, and combinations thereof.

9. A hose according to any one of claims 5-8, wherein the outer tubular layer has an outer surface defining an outermost surface of the hose, and the inner tubular layer has an inner surface defining an innermost surface of the hose.

10. A hose according to any preceding claim, wherein the first thermoplastic material comprises from 1% to 5% by weight of a heat stabilizer, and/or the first thermoplastic material has a melting temperature of at least 200°C and a Vicat softening temperature of at least 125°C.

11. A hose according to any preceding claim, wherein the first thermoplastic material has a melting temperature of at least 215°C and a Vicat softening temperature of at least 140°C, and more preferably at least 150°C.

12. A hose according to any preceding claim, capable of operating at a temperature of at least 148,88°C (300°F) for 1000 hours or longer.

13. A method of making a hose, comprising the steps of extruding a core tube, applying a reinforcement layer around the core tube, and extruding a cover around the reinforcement layer, wherein at least one of the core tube and cover are made of a thermoplastic material comprising one or more thermoplastic polyether-polyester block copolymers, and said thermoplastic material has a Shore D hardness no less than 60 and said first thermoplastic material comprises a blend of a first thermoplastic polyether-polyester block copolymer **characterized by** a Shore D hardness no less than 65 and a second thermoplastic polyether-polyester block copolymer **characterized by** a Shore D hardness less than the first thermoplastic polyether-polyester block copolymer but no less than 55.

## Patentansprüche

1. Schlauch, der eine oder mehrere röhrenförmige Schichten umfasst, wobei mindestens eine Schicht aus einem ersten thermoplastischen Material hergestellt ist, das ein oder mehrere thermoplastische Polyether-Polyester-Blockcopolymere umfasst, und das thermoplastische Material eine Shore-D-Härte von nicht weniger als 60 aufweist, wobei das erste thermoplastische Material eine Mischung aus einem ersten thermoplastischen Polyether-Polyester-Blockcopolymer, das durch eine Shore-D-Härte von nicht weniger als 65 gekennzeichnet ist, und einem zweiten thermoplastischen Polyether-Polyester-Blockcopolymer umfasst, das durch eine Shore-D-Härte geringer als das erste thermoplastische Polyether-Polyester-Blockcopolymer gekennzeichnet ist, jedoch nicht weniger als 55.

2. Schlauch nach Anspruch 1, wobei das erste thermoplastische Material eine Mischung aus einem ersten thermoplastischen Polyether-Polyester-Blockcopolymer, das durch eine Shore-D-Härte von nicht weniger als 70 gekennzeichnet ist, und einem zweiten thermoplastischen Polyether-Polyester-Blockcopolymer umfasst, das durch eine Shore-D-Härte geringer als das erste thermoplastische Polyether-Polyester-Blockcopolymer gekennzeichnet ist, jedoch nicht weniger als 60.

3. Schlauch nach Anspruch 1 oder Anspruch 2, wobei die Mischung 5 Gew.-% bis 95 Gew.-% des ersten Copolymers und 5 Gew.-% bis 95 Gew.-% des zweiten Copolymers umfasst; die Mischung bevorzugter 25 Gew.-% bis 75 Gew.-% des ersten Copolymers und 25 Gew.-% bis 75 Gew.-% des zweiten Copolymers umfasst; und die Mischung noch bevorzugter 30 Gew.-% bis 40 Gew.-% des ersten Copolymers und 60 Gew.-% bis 70 Gew.-% des zweiten Copolymers umfasst.

4. Schlauch nach einem vorhergehenden Anspruch, wobei das erste oder zweite Copolymer ein Polybutylenterephthalat-Polytetramethylenoxid-Blockpolymer ist.

5. Schlauch nach einem vorhergehenden Anspruch, der eine innere röhrenförmige Schicht und eine äußere röhrenförmige Schicht, die die innere röhrenförmige Schicht umgibt, umfasst, wobei die innere röhrenförmige Schicht und/oder die äußere röhrenförmige Schicht aus dem ersten thermoplastischen Material hergestellt ist bzw. sind.

6. Schlauch nach Anspruch 8, wobei das innere röhrenförmige Element aus dem ersten thermoplastischen Material hergestellt ist, das so konfektioniert ist, dass es eine Shore-D-Härte von nicht weniger als 65 und bevorzugter nicht weniger als 70 aufweist, und/oder das äußere röhrenförmige Element aus einem zweiten thermoplastischen Material hergestellt ist, das ein oder mehrere thermoplastische Polyether-Polyester-Blockcopolymere umfasst, und das zweite thermoplastische Material des äußeren röhrenförmigen Elements eine Shore-D-Härte aufweist, die geringer ist als die Shore-D-Härte des ersten thermoplastischen Materials, das das innere röhrenförmige Element bildet, jedoch nicht geringer als 64.

7. Schlauch nach Anspruch 5 oder Anspruch 6, wobei sowohl die innere als auch die äußere röhrenförmige Schicht extrudiert sind.

8. Schlauch nach einem der Ansprüche 5 bis 7, der ferner eine Verstärkungsschicht umfasst, die das innere röhrenförmige Element umgibt, und wobei die äußere röhrenförmige Schicht die Verstärkungsschicht umgibt und die Verstärkungsschicht ein oder mehrere Filamente aufweist, die schraubenförmig um die innere röhrenförmige Schicht gewickelt sind, wobei das eine oder die mehreren Filament(e) vorzugsweise aus einer Gruppe ausgewählt sind, die Nylonfasern, Polyesterfasern, Aramidfasern, Polyvinylalkohol-Fasern, Polyvinylacetat-Fasern, Polyolefinfasern, Polyphenylenbenzobisoxazol-Fasern, Metalldrähte und Kombinationen davon umfasst.

9. Schlauch nach einem der Ansprüche 5 bis 8, wobei die äußere röhrenförmige Schicht eine Außenfläche aufweist, die eine äußerste Fläche des Schlauchs definiert, und die innere röhrenförmige Schicht eine Innenfläche aufweist, die eine innerste Fläche des Schlauchs definiert.

10. Schlauch nach einem vorhergehenden Anspruch, wobei das erste thermoplastische Material 1 Gew.-% bis 5 Gew.-% eines Wärmestabilisators umfasst und/oder das erste thermoplastische Material eine Schmelztemperatur von mindestens 200 °C und eine Vicat-Erweichungstemperatur von mindestens 125 °C aufweist.

11. Schlauch nach einem vorhergehenden Anspruch, wobei das erste thermoplastische Material eine Schmelztemperatur von mindestens 215 °C und eine Vicat-Erweichungstemperatur von mindestens 140 °C und bevorzugter mindestens 150 °C aufweist.

12. Schlauch nach einem vorhergehenden Anspruch, der in der Lage ist, 1000 Stunden oder länger bei einer Temperatur von mindestens 148,88°C (300 °F) zu funktionieren.

13. Verfahren zur Herstellung eines Schlauchs, das folgende Schritte umfasst: Extrudieren einer Kernröhre, Aufbringen einer Verstärkungsschicht um die Kernröhre herum und Extrudieren eines Mantels um die Verstärkungsschicht herum, wobei die Kernröhre und/oder der Mantel aus einem thermoplastischen Material hergestellt sind, das ein oder mehrere thermoplastische Polyether-Polyester-Blockcopolymere umfasst, und das thermoplastische Material eine Shore-D-Härte von nicht weniger als 60 aufweist und das erste thermoplastische Material eine Mischung aus einem ersten thermoplastischen Polyether-Polyester-Blockcopolymer, das durch eine Shore-D-Härte von nicht weniger als 65 gekennzeichnet ist, und einem zweiten thermoplastischen Polyether-Polyester-Blockcopolymer umfasst, das durch eine Shore-D-Härte geringer als das erste thermoplastische Polyether-Polyester-Blockcopolymer gekennzeichnet ist, jedoch nicht weniger als 55.

## Revendications

1. Tuyau souple comprenant une ou plusieurs couches tubulaires, au moins une couche étant faite d'un premier matériau thermoplastique qui comprend un ou plusieurs copolymères thermoplastiques à blocs de polyéther et de polyester et ledit matériau thermoplastique présente une dureté Shore D non inférieure à 60, ledit premier matériau thermoplastique comprenant un mélange d'un premier copolymère thermoplastique à blocs de polyéther et de polyester **caractérisé par** une dureté Shore D non inférieure à 65 et d'un deuxième copolymère thermoplastique à blocs de polyéther et de polyester **caractérisé par** une dureté Shore D inférieure à celle du premier copolymère thermoplastique à blocs de polyéther et de polyester mais non inférieure à 55.

2. Tuyau souple selon la revendication 1, dans lequel ledit premier matériau thermoplastique comprend un mélange d'un premier copolymère thermoplastique à blocs de polyéther et de polyester **caractérisé par** une dureté Shore D non inférieure à 70 et d'un deuxième copolymère thermoplastique à blocs de polyéther et de polyester **caractérisé par** une dureté Shore D inférieure à celle du premier copolymère thermoplastique à blocs de polyéther et de polyester mais non inférieure à 60.

3. Tuyau souple selon la revendication 1 ou la revendication 2, dans lequel le mélange comprend de 5% à 95% en poids du premier copolymère et de 5% à 95% en poids du deuxième copolymère ; plus préférentiellement le mélange comprend de 25% à 75% en poids du premier copolymère et de 25% à 75% en poids du deuxième copolymère ; et encore plus préférentiellement le mélange comprend de 30% à 40% en poids du premier copolymère et de 60% à 70% en poids du deuxième copolymère.

4. Tuyau souple selon l'une quelconque des revendications précédentes, dans lequel le premier ou le deuxième copolymère est un polymère à blocs de poly(téréphtalate de butylène) et de poly(oxyde de tétraméthylène).

5. Tuyau souple selon l'une quelconque des revendications précédentes, comprenant une couche tubulaire interne et une couche tubulaire externe entourant la couche tubulaire interne, dans lequel l'une au moins parmi la couche tubulaire interne et la couche tubulaire externe est faite dudit premier matériau thermoplastique.

6. Tuyau souple selon la revendication 8, dans lequel l'élément tubulaire interne est fait dudit premier matériau thermoplastique formulé de manière à présenter une dureté Shore D non inférieure à 65 et plus préférentiellement non inférieure à 70 ; et/ou l'élément tubulaire externe est fait d'un deuxième matériau thermoplastique comprenant un ou plusieurs copolymères thermoplastiques à blocs de polyéther et de polyester et ledit deuxième matériau thermoplastique dudit élément tubulaire externe présente une dureté Shore D inférieure à la dureté Shore D du premier matériau thermoplastique formant l'élément tubulaire interne mais non inférieure à 64.

7. Tuyau souple selon la revendication 5 ou la revendication 6, dans lequel la couche tubulaire interne de même que la couche tubulaire externe sont extrudées.

8. Tuyau souple selon l'une quelconque des revendications 5 à 7, comprenant en plus une couche de renfort entourant l'élément tubulaire interne et dans lequel la couche tubulaire externe entoure la couche de renfort ; et la couche de renfort contient un ou plusieurs filaments enroulés en hélice autour de la couche tubulaire interne, le ou les filaments étant de préférence choisis dans un groupe comprenant des fibres de nylon, des fibres de polyester, des fibres d'aramide, des fibres d'alcool polyvinylique, des fibres de polyacétate de vinyle, des fibres de polyoléfine, des fibres de polyphénylène benzobisoxazole, des fils métalliques, ainsi que des combinaisons des précédents.

9. Tuyau souple selon l'une quelconque des revendications 5 à 8, dans lequel la couche tubulaire externe possède une surface extérieure qui définit une surface la plus à l'extérieur du tuyau souple et la couche tubulaire interne possède une surface intérieure qui définit une surface la plus à l'intérieur du tuyau souple.

10. Tuyau souple selon l'une quelconque des revendications précédentes, dans lequel le premier matériau thermoplastique comprend de 1% à 5% en poids d'un agent thermostabilisant et/ou le premier matériau thermoplastique a une température de fusion d'au moins 200°C et une température de ramollissement Vicat d'au moins 125°C.

11. Tuyau souple selon l'une quelconque des revendications précédentes, dans lequel le premier matériau thermoplastique a une température de fusion d'au moins 215°C et une température de ramollissement Vicat d'au moins 140°C, plus préférentiellement d'au moins 150°C.

12. Tuyau souple selon l'une quelconque des revendications précédentes, capable de fonctionner à une température d'au moins 148,88°C (300°F) pendant 1000 heures ou plus.

13. Procédé de fabrication d'un tuyau souple, comprenant les étapes consistant à extruder une âme tubulaire, appliquer une couche de renfort autour de l'âme tubulaire et extruder une gaine autour de la couche de renfort, dans lequel un élément au moins parmi l'âme tubulaire et la gaine est fait d'un matériau thermoplastique comprenant une ou plusieurs copolymères thermoplastiques à blocs de polyéther et de polyester, ledit matériau thermoplastique présentant une dureté Shore D non inférieure à 60, et ledit premier matériau thermoplastique comprend un mélange d'un premier copolymère thermoplastique à blocs de polyéther et de polyester **caractérisé par** une dureté Shore D non inférieure à 65 et d'un deuxième copolymère thermoplastique à blocs de polyéther et de polyester **caractérisé par** une dureté Shore D inférieure à celle du premier copolymère thermoplastique à blocs de polyéther et de polyester mais non inférieure à 55.
